# EUROPÄISCHE PATENTSCHRIFT

(11) **EP 2 861 889 B1**
(45) Veröffentlichungstag und Bekanntmachung des Hinweises auf die Patenterteilung: **25.03.2020**
(21) Anmeldenummer: 13726190.5
(22) Anmeldetag: 29.05.2013
(51) Int. Cl.: F16F 15/14

(54) **FLIEHKRAFTPENDELEINRICHTUNG MIT EINER PENDELROLLE**
CENTRIFUGAL-FORCE PENDULUM DEVICE COMPRISING A PENDULUM ROLLER
DISPOSITIF DE PENDULE CENTRIFUGE COMPRENANT UNE ROULEAU DE PENDULE

(30) Priorität: 19.06.2012 DE 102012210251
(43) Veröffentlichungstag der Anmeldung: 22.04.2015
(73) Patentinhaber: Schaeffler Technologies AG & Co. KG, 91074 Herzogenaurach (DE)
(72) Erfinder: JUNKER, Uli, 77652 Offenburg (DE); FENDER-OBERLE, Vincent, 67150 Erstein-Krafft (FR); GRAHL, Uwe, 77815 Bühl (DE); FERDERER, Frank, 77815 Bühl-Moos (DE)
(86) Internationale Anmeldenummer: PCT/EP2013/061057
(87) Internationale Veröffentlichungsnummer: WO 2013/189705

(56) Entgegenhaltungen:
- DE-A1-102009 037 481
- DE-A1-102009 053 482
- DE-A1-102011 101 137

## Beschreibung

Die Erfindung betrifft eine Pendelrolle für eine Fliehkraftpendeleinrichtung mit wenigstens einer Pendelmasse und einem Pendelmassenträgerteil aufweisend eine Pendelrollendrehachse, zwei erste Rollenabschnitte mit jeweils einem ersten Durchmesser und einen in Erstreckungsrichtung der Pendelrollendrehachse zwischen den ersten Rollenabschnitten angeordneten zweiten Rollenabschnitt mit einem zweiten Durchmesser sowie eine Fliehkraftpendeleinrichtung, insbesondere für einen Antriebsstrang eines brennkraftmaschinengetriebenen Kraftfahrzeugs, aufweisend ein um eine Drehachse drehbares Pendelmassenträgerteil und wenigstens eine an dem Pendelmassenträgerteil unter Fliehkrafteinwirkung verlagerbar angeordnete Pendelmasse.

Aus der DE 10 2006 028 556 A1 ist eine Drehmomentübertragungseinrichtung bekannt im Antriebsstrang eines Kraftfahrzeugs zur Drehmomentübertragung zwischen einer Antriebseinheit, insbesondere einer Brennkraftmaschine, mit einer Abtriebswelle, insbesondere einer Kurbelwelle, und einem Getriebe mit mindestens einer Getriebeeingangswelle, mit einer Fliehkraftpendeleinrichtung, die mehrere Pendelmassen umfasst, die mit Hilfe von Laufrollen an einer Pendelmassenträgereinrichtung relativ zu dieser bewegbar angebracht sind, und mit mindestens einer Kupplungseinrichtung und/oder mit mindestens einer Drehschwingungsdämpfungseinrichtung, bei der die Laufrollen jeweils mindestens einen Bund aufweisen, der unter Fliehkrafteinwirkung auf die Pendelmasse in axialer Richtung zwischen der Pendelmasse und der Pendelmassenträgereinrichtung angeordnet ist, um die Drehmomentübertragungseinrichtung, insbesondere im Hinblick auf die im Betrieb auftretende Geräuschentwicklung, zu optimieren. Gemäß der DE 10 2006 028 556 A1 sind an der Laufrolle zwei Bunde vorgesehen, die sich radial nach außen verjüngen. Die Bunde haben unter anderem die Funktion, im normalen Betrieb der Drehmomentübertragungseinrichtung zu verhindern, dass die Pendelmassen in Kontakt mit der Pendelmassenträgereinrichtung kommen. Eine gattungsgemässe Fliehkraftpendeleinrichtung ist im Dokument DE102009037481 offenbart.

Der Erfindung liegt die Aufgabe zugrunde, eine eingangs genannte Pendelrolle baulich und/oder funktional zu verbessern und eine baulich und/oder funktional verbesserte Fliehkraftpendeleinrichtung bereit zu stellen.

Die Lösung der Aufgabe erfolgt durch die Merkmale des Anspruchs 1. Vorgesehen ist eine Fliehkraftpendeleinrichtung mit einer Pendelrolle für eine Fliehkraftpendeleinrichtung mit wenigstens einer Pendelmasse und einem Pendelmassenträgerteil aufweisend eine Pendelrollendrehachse, zwei erste Rollenabschnitte mit jeweils einem ersten Durchmesser und einen in Erstreckungsrichtung der Pendelrollendrehachse zwischen den ersten Rollenabschnitten angeordneten zweiten Rollenabschnitt mit einem zweiten Durchmesser, bei der der erste Durchmesser kleiner als der zweite Durchmesser ist und bei der zwischen den ersten Rollenabschnitten und dem zweiten Rollenabschnitt jeweils ein als rampenartiger Übergang zwischen dem ersten Durchmesser und dem zweiten Durchmesser ausgebildeter Zentrierabschnitt angeordnet ist.

Die Pendelrolle kann zur verlagerbaren Anordnung der wenigstens einen Pendelmasse an dem Pendelmassenträgerteil dienen. Die Pendelrollendrehachse kann zu einer Drehachse der Fliehkraftpendeleinrichtung parallel anordenbar sein. Die Pendelrolle mit den ersten Rollenabschnitten und dem zweiten Rollenabschnitt kann einstückig ausgebildet sein. Die Pendelrolle kann ohne Bund ausgeführt sein. Die Pendelrolle kann eine stufenbolzenartige Form aufweisen. Die Pendelrolle kann einen Kreisquerschnitt aufweisen. Die ersten Rollenabschnitte können jeweils einen in Erstreckungsrichtung der Pendelrollendrehachse zumindest annähernd konstanten Kreisquerschnitt aufweisen. Die ersten Rollenabschnitte können jeweils eine zylindrische Form aufweisen. Die ersten Rollenabschnitte können jeweils eine kreiszylindrische Form aufweisen. Der zweite Rollenabschnitt kann einen Kreisquerschnitt aufweisen. Der zweite Rollenabschnitt kann einen in Erstreckungsrichtung der Pendelrollendrehachse zumindest annähernd konstanten Kreisquerschnitt aufweisen. Der zweite Rollenabschnitt kann eine zylindrische Form aufweisen. Der zweite Rollenabschnitt kann eine kreiszylindrische Form aufweisen. Die Pendelrolle kann zwei Zentrierabschnitte aufweisen.

Die erfindungsgemäße Pendelrolle ermöglicht einen Entfall von Bunden. Damit entspricht der maximale Außendurchmesser der Pendelrolle dem zweiten Durchmesser. Ein Verschleiß an Bunden ist verhindert. Ein Verschleiß an dem Pendelmassenträgerteil und/oder an der wenigstens einen Pendelmasse ist reduziert. Ein Geräuschverhalten ist verbessert. Eine Ausnehmung an dem Pendelmassenträgerteil und/oder an der wenigstens einen Pendelmasse kann unter Berücksichtigung des zweiten Durchmessers der Pendelrolle bemessen sein. Ein Bund muss nicht berücksichtigt werden. Eine Ausnehmung an dem Pendelmassenträgerteil und/oder an der wenigstens einen Pendelmasse kann verkleinert sein. Eine Führung der Pendelrolle ist verbessert. Gesonderte Abstandshalter zwischen dem Pendelmassenträgerteil und der wenigstens einen Pendelmasse können entfallen. Ein Abstand zwischen dem Pendelmassenträgerteil und der wenigstens einen Pendelmasse in Erstreckungsrichtung der Drehachse kann verringert sein. Ein Bauraum in Erstreckungsrichtung der Drehachse ist damit verringert. Eine Biegebelastung der Pendelrolle ist reduziert. Die Pendelrolle weist eine vereinfachte Form auf. Kosten werden gesenkt.

Die Zentrierabschnitte können jeweils einen Durchmesser aufweisen, der ausgehend von einem ersten Rollenabschnitt mit dem ersten Durchmesser bis zu dem zweiten Rollenabschnitt mit dem zweiten Durchmesser stetig zunimmt. Die Zentrierabschnitte können jeweils einen in Erstreckungsrichtung der Pendelrollendrehachse abnehmenden oder zunehmenden Kreisquerschnitt aufweisen. Die Zentrierabschnitte können jeweils eine Kegelstumpfform aufweisen. Die Zentrierabschnitte können jeweils eine Kreiskegelstumpfform aufweisen. Die Zentrierabschnitte können jeweils eine Kegelstumpfform mit einer Grundfläche und einer Deckfläche aufweisen. Die Zentrierabschnitte können jeweils mit ihrer Deckfläche einem ersten Rollenabschnitt und mit ihrer Grundfläche dem zweiten Rollenabschnitt zugewandt angeordnet sein. Die Zentrierabschnitte können jeweils eine Anlauffläche für das Pendelmassenträgerteil und/oder für die wenigstens eine Pendelmasse bilden. Die Zentrierabschnitte können jeweils als Abstandshalter für das Pendelmassenträgerteil und/oder für die wenigstens eine Pendelmasse dienen.

Die Lösung der Aufgabe erfolgt gemäß Anspruch 1 mit einer Fliehkraftpendeleinrichtung, insbesondere für einen Antriebsstrang eines brennkraftmaschinengetriebenen Kraftfahrzeugs, aufweisend ein um eine Drehachse drehbares Pendelmassenträgerteil und wenigstens eine an dem Pendelmassenträgerteil unter Fliehkrafteinwirkung verlagerbar angeordnete Pendelmasse, bei der die wenigstens eine Pendelmasse mithilfe wenigstens einer derartigen Pendelrolle an dem Pendelmassenträgerteil geführt ist.

Mithilfe der Fliehkraftpendeleinrichtung kann eine Kompensation von Drehungleichförmigkeiten verbessert sein. Derartige Drehungleichförmigkeiten können insbesondere aufgrund periodisch ablaufender Verbrennungsvorgänge in einer Brennkraftmaschine auftreten. Der Antriebsstrang kann einen Drehschwingungsdämpfer aufweisen. Der Drehschwingungsdämpfer kann ein Flanschteil aufweisen. Der Drehschwingungsdämpfer kann ein Eingangsteil und ein Ausgangsteil aufweisen. Das Eingangsteil des Drehschwingungsdämpfers kann einer Brennkraftmaschine zugeordnet sein. Das Ausgangsteil des Drehschwingungsdämpfers kann einer Reibungskupplung zugeordnet sein. Das Ausgangsteil des Drehschwingungsdämpfers kann ein Flanschteil aufweisen. Der Drehschwingungsdämpfer kann ein Zweimassenschwungrad sein. Der Antriebsstrang kann eine Reibungskupplung aufweisen. Die Reibungskupplung kann ein Flanschteil aufweisen. Die Reibungskupplung kann eine Kupplungsscheibe aufweisen. Der Antriebsstrang kann einen Drehmomentwandler aufweisen. Der Drehmomentwandler kann ein Flanschteil aufweisen. Das Flanschteil der Reibungskupplung kann das Pendelmassenträgerteil sein. Die Kupplungsscheibe der Reibungskupplung kann das Pendelmassenträgerteil sein. Das Flanschteil des Drehschwingungsdämpfers kann das Pendelmassenträgerteil sein. Das Flanschteil des Ausgangsteils des Drehschwingungsdämpfers kann das Pendelmassenträgerteil sein. Das Flanschteil des Drehmomentwandlers kann das Pendelmassenträgerteil sein.

Die wenigstens eine Pendelmasse kann entlang einer Pendelrollenbahn führbar sein. Die Pendelrollenbahn kann an dem Pendelmassenträgerteil angeordnet sein. Die Pendelrollenbahn kann mithilfe wenigstens einer Ausnehmung gebildet sein. Die wenigstens eine Ausnehmung kann eine nierenartige Form aufweisen. Die wenigstens eine Ausnehmung kann an dem Pendelmassenträgerteil angeordnet sein. Die wenigstens eine Ausnehmung kann an der wenigstens einen Pendelmasse angeordnet sein. Die wenigstens eine Pendelmasse kann entlang einer vorgegebenen Bahn verlagerbar sein. Die wenigstens eine Pendelmasse kann zwischen einer ersten Endlage und einer zweiten Endlage verlagerbar sein. Die wenigstens eine Pendelmasse kann zur Drehachse der Fliehkraftpendeleinrichtung exzentrisch angeordnet sein. Die Fliehkraftpendeleinrichtung kann mehrere, insbesondere zwei, drei oder vier Pendelmassen aufweisen. Die wenigstens eine Pendelmasse kann eine kreisringbogenartige Form aufweisen. Die kreisringbogenartige Form der wenigstens einen Pendelmasse kann sich über einen Mittelpunktswinkel von ca. 160°-190°, insbesondere von ca. 180°, erstrecken. Die kreisringbogenartige Form der wenigstens einen Pendelmasse kann sich über einen Mittelpunktswinkel von ca. 100°-130°, insbesondere von ca. 120°, erstrecken. Die kreisringbogenartige Form der wenigstens einen Pendelmasse kann sich über einen Mittelpunktswinkel von ca. 70°-100°, insbesondere von ca. 90°, erstrecken.

Die wenigstens eine Pendelmasse kann ein einziges Pendelmasseteil aufweisen. Das Pendelmasseteil kann wenigstens eine Ausnehmung zur Bildung einer Pendelrollenbahn aufweisen. Das Pendelmasseteil kann zwei Ausnehmungen zur Bildung einer Pendelrollenbahn aufweisen. Das Pendelmasseteil kann in Erstreckungsrichtung der Drehachse von dem Pendelmassenträgerteil eingefasst sein.

Die wenigstens eine Pendelmasse kann zwei Pendelmasseteile aufweisen. Die Pendelmasseteile können jeweils wenigstens eine Ausnehmung zur Bildung einer Pendelrollenbahn aufweisen. Die Pendelmasseteile können jeweils zwei Ausnehmungen zur Bildung einer Pendelrollenbahn aufweisen. Die zwei Pendelmasseteile der wenigstens einen Pendelmasse können einander in Erstreckungsrichtung der Drehachse gegenüberliegend angeordnet sein. Die zwei Pendelmasseteile der wenigstens einen Pendelmasse können einander gegenüberliegend beidseits des Pendelmassenträgerteils angeordnet sein. Die zwei Pendelmasseteile der wenigstens einen Pendelmasse können mit ihren Pendelrollenbahnen fluchtend angeordnet sein. Die zwei Pendelmasseteile der wenigstens einen Pendelmasse können miteinander fest verbunden sein. Die zwei Pendelmasseteile der wenigstens einen Pendelmasse können miteinander vernietet sein.

Das Pendelmassenträgerteil kann für jede Pendelmasse wenigstens eine Ausnehmung zur Bildung einer Pendelrollenbahn aufweisen. Das Pendelmassenträgerteil kann für jede Pendelmasse zwei Ausnehmungen zur Bildung einer Pendelrollenbahn aufweisen. Die Fliehkraftpendeleinrichtung kann für jede Pendelmasse wenigstens eine Pendelrolle aufweisen. Die Fliehkraftpendeleinrichtung kann für jede Pendelmasse zwei Pendelrollen aufweisen.

Das Pendelmassenträgerteil und/oder die wenigstens eine Pendelmasse kann eine Ausnehmung zur Aufnahme der wenigstens einen Pendelrolle an ihrem zweiten Rollenabschnitt aufweisen und die wenigstens eine Pendelrolle kann in der Ausnehmung spielbehaftet und eng geführt sein. Die Pendelrolle kann in der Ausnehmung derart spielbehaftet geführt sein, dass ein Rollen der Pendelrolle in der Ausnehmung ermöglicht ist. Die Pendelrolle kann in der Ausnehmung derart eng geführt sein, dass eine Verkippbarkeit der Pendelrolle in der Ausnehmung reduziert oder verhindert ist. Die Pendelrolle kann in der Ausnehmung derart eng geführt sein, dass ein Einführen der Pendelrolle in die Ausnehmung in Erstreckungsrichtung der Pendelrollenachse ermöglicht ist, wobei der zweite Durchmesser als maximaler Durchmesser berücksichtigt ist. Ein Bund kann unberücksichtigt bleiben.

Das Pendelmassenträgerteil und/oder die wenigstens eine Pendelmasse kann eine Oberfläche mit einer reduzierten Rauheit aufweisen. Die Oberfläche mit der reduzierten Rauheit kann eine der wenigstens einen Pendelmasse zugewandte Oberfläche des Pendelmassenträgerteils sein. Die Oberfläche mit der reduzierten Rauheit kann eine dem Pendelmassenträgerteil zugewandte Oberfläche der wenigstens einen Pendelmasse sein. Das Pendelmassenträgerteil und/oder die wenigstens eine Pendelmasse weist eine Gleitschicht auf.

Damit ist eine Reibung zwischen dem Pendelmassenträgerteil und/oder der wenigstens einen Pendelmasse reduziert. Ein Verschleiß ist reduziert. Eine Geräuschentwicklung ist reduziert. Zusammenfassend und mit anderen Worten dargestellt ergibt sich somit durch die Erfindung unter anderem eine Rolle ohne Zentrierbord (Fliehkraftpendel in einem Trockenraum). Die Rolle ist eine Stufen-Rolle (kleiner + großer Durchmesser). Der Zentrierbord am großen Durchmesser kann entfallen. Zu den Pendelmassen hin sind Zentrier-Schrägen vorhanden, damit die Rolle möglichst wenig Reibung erzeugt. Des Weiteren können Abstandselemente entfallen. Somit kann ein Spalt zwischen einem Flansch und einer Pendelmassen verringert sein, was dazu führt, dass das Pendel axial flacher baut. Eine Bahn im Flansch kann, aufgrund der fehlenden Zentrierborde, wesentlich enger ausgelegt sein. Somit können die Pendel präziser geführt sein, wodurch potentielle Stoppgeräusche vermieden sind. Erfindungsgemäß, es ist eine Gleitschicht auf Pendel und/oder Flansch aufgebracht. Es besteht eine robustere Konstruktion durch Entfall der Zentrierborde. Verschleiß der Zentrierborde entfällt. Es besteht ein verbessertes Geräuschverhalten (durch engere Rollenbahnen im Flansch). Pendel baut axial flacher. Es besteht eine verringerte Biegebelastung der Rolle da kürzer (durch flachere Bauweise). Es bestehen verringerte Kosten, da Rohling für Rolle kürzer und kleinerer Durchmesser (durch Entfall Borde). Es bestehen verringerte Kosten durch Entfall der Abstandelemente und deren Montage.

Mit "kann" sind insbesondere optionale Merkmale der Erfindung bezeichnet. Demzufolge gibt es jeweils ein Ausführungsbeispiel der Erfindung, das das jeweilige Merkmal oder die jeweiligen Merkmale aufweist.

Nachfolgend werden Ausführungsbeispiele der Erfindung unter Bezugnahme auf Figuren näher beschrieben. Aus dieser Beschreibung ergeben sich weitere Merkmale und Vorteile. Konkrete Merkmale dieser Ausführungsbeispiele können allgemeine Merkmale der Erfindung darstellen. Mit anderen Merkmalen verbundene Merkmale dieser Ausführungsbeispiele können auch einzelne Merkmale der Erfindung darstellen.

Es zeigen schematisch und beispielhaft:
- Fig. 1: eine Fliehkraftpendeleinrichtung mit einem Pendelmassenträgerteil und Pendelmassen, die mithilfe von Pendelrollen an dem Pendelmassenträgerteil geführt sind, in Draufsicht,
- Fig. 2: eine Fliehkraftpendeleinrichtung mit einem Pendelmassenträgerteil und Pendelmassen, die mithilfe von Pendelrollen an dem Pendelmassenträgerteil geführt sind in Schnittansicht entlang der in Fig. 1 mit II-II bezeichneten Linie,
- Fig. 3: eine Pendelrolle mit als rampenartige Übergänge ausgebildeten Zentrierabschnitten für eine Fliehkraftpendeleinrichtung,
- Fig. 4: eine Pendelrolle mit als rampenartige Übergänge ausgebildeten Zentrierabschnitten für eine Fliehkraftpendeleinrichtung mit verringertem Abstand zwischen einem Pendelmassenträgerteil und einer Pendelmasse und
- Fig. 5: eine Pendelrolle mit als rampenartige Übergänge ausgebildeten Zentrierabschnitten für eine Fliehkraftpendeleinrichtung mit einer Pendelmasse mit Gleitschicht.

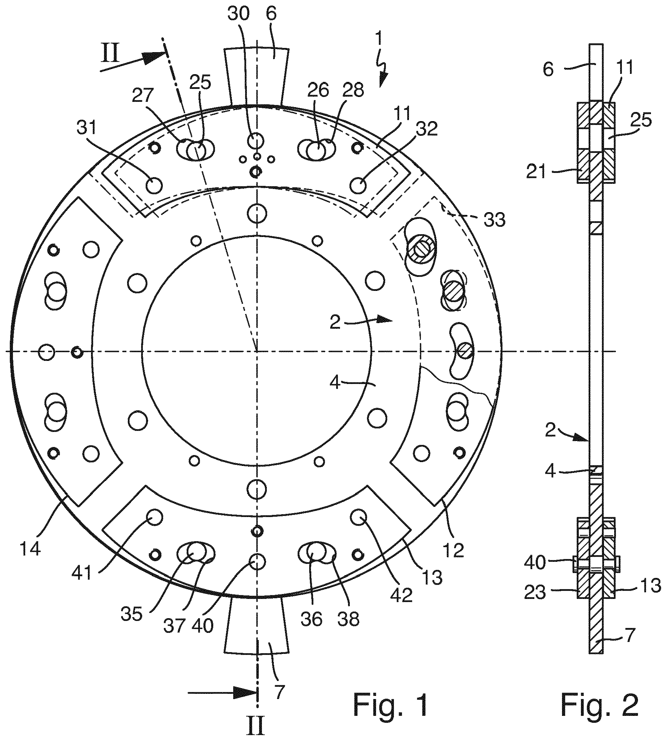

Fig. 1 zeigt eine Fliehkraftpendeleinrichtung 1 mit einem Pendelmassenträgerteil 2 und Pendelmassen 11, 12, 13 14, die mithilfe von Pendelrollen 25, 26, 35, 36 an dem Pendelmassenträgerteil 2 geführt sind, in der Draufsicht. Das Pendelmassenträgerteil 2 weist im Wesentlichen die Gestalt einer Kreisringscheibe 4 auf. Von der Kreisringscheibe 4 erstrecken sich zwei diametral angeordnete Ansätze 6, 7 radial nach außen. Die Ansätze 6, 7 weisen Anlageflächen für (nicht dargestellte) Bogenfedern eines Drehschwingungsdämpfers auf. Das Pendelmassenträgerteil 2 hat gleichzeitig die Funktion eines Ausgangsteils eines Drehschwingungsdämpfers und wird auch als Flansch bezeichnet.

Auf der in Fig. 1 sichtbaren Oberfläche der Kreisringscheibe 4 sind vier Pendelmassen 11, 12, 13, 14 begrenzt bewegbar an dem Pendelmassenträgerteil 2 angebracht. Fig. 2 zeigt eine Schnittansicht entlang der in Fig. 1 mit II-II bezeichneten Linie. In der Schnittansicht sieht man, dass jeweils zwei Pendelmasseteile 11, 21, 13, 23 paarweise gegenüberliegend an dem Pendelmassenträgerteil 2 angebracht sind.

Die Bewegung der Pendelmasseteile 11, 21 einer Pendelmasse wird, wie in Fig. 1 gezeigt ist, durch Pendelrollen 25, 26 ermöglicht, die in Laufbahnen 27, 28 geführt sind, die wiederum in der zugehörigen Pendelmasse 11 ausgespart sind. Die Laufbahnen 27, 28 werden von Durchgangslöchern gebildet, die sich in axialer Richtung durch die Pendelmasse 11 hindurch erstrecken und die Gestalt von Langlöchern aufweisen, die nierenförmig gekrümmt sind. Zur Anbringung der Pendelmasseteile 11, 21 an dem Pendelmassenträgerteil 2 sind des Weiteren drei Stufenbolzen 30 bis 32 vorgesehen. Innerhalb eines gestrichelten Aufbruchs 33 sieht man, dass in der Kreisringscheibe 4 ebenfalls nierenförmig gekrümmte Langlöcher zur Aufnahme der Stufenbolzen ausgebildet sind.

Die Pendelmasse 13 ist mit Hilfe von Pendelrollen 35, 36 an dem Pendelmassenträgerteil 2 angebracht. Die Bewegung der Pendelrollen 35, 36 wird durch Laufbahnen 37, 38 begrenzt. Des Weiteren sind wie bei den anderen Pendelmassen drei Stufenbolzen 40 bis 42 vorgesehen. Die Pendelrollen 35, 36 und die Stufenbolzen 40 bis 42 dienen dazu, die Bewegung der Pendelmasseteile 13, 23 in der Zeichenebene, also in radialer Richtung und in Umfangsrichtung zu begrenzen und zu definieren.

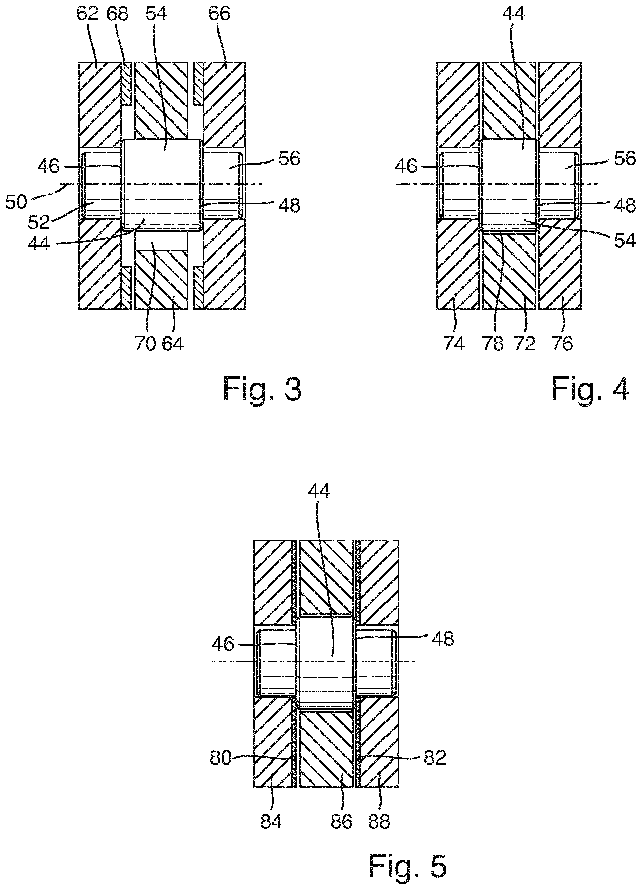

Fig. 3 zeigt eine Pendelrolle 44, wie Pendelrolle 25, 26, 35, 36 gemäß Fig. 1 oder Fig. 2, mit als rampenartige Übergänge ausgebildeten Zentrierabschnitten 46, 48 für eine Fliehkraftpendeleinrichtung, wie Fliehkraftpendeleinrichtung 1 gemäß Fig. 1 und Fig. 2.

Die Pendelrolle 44 weist eine Pendelrollendrehachse 50 auf. Die Pendelrolle 44 weist einen zylinderartig geformten Rollenabschnitt 52 mit einem ersten Durchmesser auf. Die Pendelrolle 44 weist einen zylinderartig geformten Rollenabschnitt 54 mit einem zweiten Durchmesser auf. Die Pendelrolle 44 weist einen zylinderartig geformten Rollenabschnitt 56 mit einem ersten Durchmesser auf. Der erste Durchmesser ist kleiner als der zweite Durchmesser.

Zwischen dem Rollenabschnitt 52 und dem Rollenabschnitt 54 ist der Zentrierabschnitt 46 angeordnet. Der Zentrierabschnitt 46 weist eine kegelstumpfartige Form mit einer Grundfläche und einer Deckfläche auf. Der Durchmesser der Deckfläche entspricht dem Durchmesser des Rollenabschnitts 52. Der Durchmesser der Grundfläche entspricht dem Durchmesser des Rollenabschnitts 54.

Zwischen dem Rollenabschnitt 54 und dem Rollenabschnitt 56 ist der Zentrierabschnitt 48 angeordnet. Der Zentrierabschnitt 48 weist eine kegelstumpfartige Form mit einer Grundfläche und einer Deckfläche auf. Der Durchmesser der Grundfläche entspricht dem Durchmesser des Rollenabschnitts 54. Der Durchmesser der Deckfläche entspricht dem Durchmesser des Rollenabschnitts 56.

Die Pendelrolle 44 ist mit dem Rollenabschnitt 52 an einem Pendelmasseteil 62 einer Pendelmasse, wie Pendelmasse 11, 12, 13, 14 gemäß Fig. 1 oder Fig. 2, angeordnet. Die Pendelrolle 44 ist mit dem Rollenabschnitt 54 an einem Pendelmasseträgerteil 64, wie Pendelmasseträgerteil 2 gemäß Fig. 1 oder Fig. 2, angeordnet. Die Pendelrolle 44 ist mit dem Rollenabschnitt 56 an einem Pendelmasseteil 66 einer Pendelmasse, wie Pendelmasse 11, 12, 13, 14 gemäß Fig. 1 oder Fig. 2, angeordnet.

An dem Pendelmasseteil 62 und an dem Pendelmasseteil 66 sind jeweils Anlaufelemente, wie 68, angeordnet. Das Pendelmasseträgerteil 64 weist eine Durchbrechung 70 auf. In der Durchbrechung 70 ist der Rollenabschnitt 54 der Pendelrolle 44 aufgenommen. Die Durchbrechung 70 weist eine bezogen auf den Durchmesser des Rollenabschnitts 54 der Pendelrolle 44 große Weite auf.

Fig. 4 zeigt die Pendelrolle 44 mit Zentrierabschnitten 46, 48 für eine Fliehkraftpendeleinrichtung, wie Fliehkraftpendeleinrichtung 1 gemäß Fig. 1 und Fig. 2, mit verringertem Abstand zwischen einem Pendelmassenträgerteil 72, wie Pendelmasseträgerteil 2 gemäß Fig. 1 oder Fig. 2, und Pendelmasseteilen 74, 76 einer Pendelmasse, wie Pendelmasse 11, 12, 13, 14 gemäß Fig. 1 oder Fig. 2. Die Mantelfläche des Zentrierabschnitts 46 bildet eine rampenförmige Anlauffläche für das Pendelmasseteil 74. Die Mantelfläche des Zentrierabschnitts 46 dient zur Zentrierung des Pendelmasseteils 74. Die Mantelfläche des Zentrierabschnitts 48 bildet eine rampenförmige Anlauffläche für das Pendelmasseteil 76. Die Mantelfläche des Zentrierabschnitts 48 dient zur Zentrierung des Pendelmasseteils 76. Das Pendelmasseträgerteil 72 weist eine Durchbrechung 78 auf. In der Durchbrechung 78 ist der Rollenabschnitt 54 der Pendelrolle 44 aufgenommen. Die Durchbrechung 78 weist eine bezogen auf den Durchmesser des Rollenabschnitts 54 der Pendelrolle 44 geringe Weite auf. Im Übrigen wird ergänzend insbesondere auf Fig. 3 und die zugehörige Beschreibung verwiesen.

Fig. 5 zeigt die Pendelrolle 44 mit Zentrierabschnitten 46, 48 für eine Fliehkraftpendeleinrichtung, wie Fliehkraftpendeleinrichtung 1 gemäß Fig. 1 und Fig. 2, mit einer Pendelmasse, wie Pendelmasse 11, 12, 13, 14 gemäß Fig. 1 oder Fig. 2, mit Gleitschicht 80, 82. Das Pendelmasseteil 84 weist eine dem Pendelmasseträgerteil 86, wie Pendelmasseträgerteil 2 gemäß Fig. 1 oder Fig. 2, zugewandte Seitenfläche auf. An dieser Seitenfläche des Pendelmasseteils 84 ist die Gleitschicht 80 angeordnet. Das Pendelmasseteil 88 weist eine dem Pendelmasseträgerteil 86, wie Pendelmasseträgerteil 2 gemäß Fig. 1 oder Fig. 2, zugewandte Seitenfläche auf. An dieser Seitenfläche des Pendelmasseteils 88 ist die Gleitschicht 82 angeordnet. Im Übrigen wird ergänzend insbesondere auf Fig. 3 und die zugehörige Beschreibung verwiesen.

### Bezugszeichenliste

- 1: Fliehkraftpendeleinrichtung
- 2: Pendelmasseträgerteil
- 4: Kreisringscheibe
- 6: radialer Ansatz
- 7: radialer Ansatz
- 11: Pendelmasse, Pendelmasseteil
- 12: Pendelmasse
- 13: Pendelmasse, Pendelmasseteil
- 14: Pendelmasse
- 21: Pendelmasseteil
- 23: Pendelmasseteil
- 25: Pendelrolle
- 26: Pendelrolle
- 27: Laufbahn
- 28: Laufbahn
- 30: Stufenbolzen
- 31: Stufenbolzen
- 32: Stufenbolzen
- 33: Aufbruch
- 35: Pendelrolle
- 36: Pendelrolle
- 37: Laufbahn
- 38: Laufbahn
- 40: Stufenbolzen
- 41: Stufenbolzen
- 42: Stufenbolzen
- 44: Pendelrolle
- 46: Zentrierabschnitt
- 48: Zentrierabschnitt
- 50: Pendelrollendrehachse
- 52: Rollenabschnitt
- 54: Rollenabschnitt
- 56: Rollenabschnitt
- 62: Pendelmasseteil
- 64: Pendelmasseträgerteil
- 66: Pendelmasseteil
- 68: Anlaufelement
- 70: Durchbrechung
- 72: Pendelmassenträgerteil
- 74: Pendelmasseteil
- 76: Pendelmasseteil
- 78: Durchbrechung
- 80: Gleitschicht
- 82: Gleitschicht
- 84: Pendelmasseteil
- 86: Pendelmasseträgerteil
- 88: Pendelmasseteil

## Patentansprüche

1. Fliehkraftpendeleinrichtung (1), insbesondere für einen Antriebsstrang eines brennkraftmaschinengetriebenen Kraftfahrzeugs, aufweisend ein um eine Drehachse drehbares Pendelmassenträgerteil (2, 64, 72, 86) und wenigstens eine an dem Pendelmassenträgerteil (2, 64, 72, 86) unter Fliehkrafteinwirkung verlagerbar angeordnete Pendelmasse (11, 12, 13, 14), wobei die wenigstens eine Pendelmasse (11, 12, 13, 14) mithilfe wenigstens einer Pendelrolle (25, 26, 35, 36, 44), an dem Pendelmassenträgerteil (2, 64,72,86) geführt ist, wobei die Pendelrolle (25, 26, 35, 36, 44) eine Pendelrollendrehachse (50), zwei erste Rollenabschnitte (52, 56) mit jeweils einem ersten Durchmesser und einen in Erstreckungsrichtung der Pendelrollendrehachse (50) zwischen den ersten Rollenabschnitten (52, 56) angeordneten zweiten Rollenabschnitt (54) mit einem zweiten Durchmesser aufweist, wobei der erste Durchmesser kleiner als der zweite Durchmesser ist und zwischen den ersten Rollenabschnitten (52, 56) und dem zweiten Rollenabschnitt (54) jeweils ein als rampenartiger Übergang zwischen dem ersten Durchmesser und dem zweiten Durchmesser ausgebildeter Zentrierabschnitt (46, 48) angeordnet ist, **dadurch gekennzeichnet, dass** das Pendelmassenträgerteil (2, 64, 72, 86) und/oder die wenigstens eine Pendelmasse (11, 12, 13, 14) eine Gleitschicht (80, 82) aufweist.

2. Fliehkraftpendeleinrichtung (1) nach Anspruch 1, **dadurch gekennzeichnet, dass** die Zentrierabschnitte (46, 48) jeweils einen Durchmesser aufweisen, der ausgehend von einem ersten Rollenabschnitt (52, 56) mit dem ersten Durchmesser bis zu dem zweiten Rollenabschnitt (54) mit dem zweiten Durchmesser stetig zunimmt.

3. Fliehkraftpendeleinrichtung (1) nach einem der vorherigen Ansprüche 1 oder 2, **dadurch gekennzeichnet, dass** das Pendelmassenträgerteil (2, 64, 72, 86) und/oder die wenigstens eine Pendelmasse (11, 12, 13, 14) eine Ausnehmung (78) zur Aufnahme der wenigstens einen Pendelrolle (25, 26, 35, 36, 44) an ihrem zweiten Rollenabschnitt (54) aufweist und die wenigstens eine Pendelrolle (25, 26, 35, 36, 44) in der Ausnehmung (78) spielbehaftet und eng geführt ist.

4. Fliehkraftpendeleinrichtung (1) nach einem der Ansprüche 1 bis 3, **dadurch gekennzeichnet, dass** das Pendelmassenträgerteil (2, 64, 72, 86) und/oder die wenigstens eine Pendelmasse (11, 12, 13, 14) eine Oberfläche mit einer reduzierten Rauheit aufweist.

## Claims

1. A centrifugal-force pendulum device (1), in particular for a drive train of an internal combustion engine-driven motor vehicle, comprising a pendulum mass support part (2, 64, 72, 86) which can be rotated about an axis of rotation and at least one pendulum mass (11, 12, 13, 14) which can be displaced under the influence of centrifugal force arranged on the pendulum mass support part (2, 64, 72, 86), wherein the at least one pendulum mass (11, 12, 13, 14) is guided on the pendulum mass support part (2, 64, 72, 86) using at least one pendulum roller (25, 26, 35, 36, 44), the pendulum roller (25, 26, 35, 36, 44) having a pendulum roller axis of rotation (50), two first roller sections (52, 56), each with a first diameter, and a second roller section (54) with a second diameter arranged between the first roller sections (52, 56) in the direction of extension of the pendulum roller axis of rotation (50), wherein the first diameter is smaller than the second diameter and a centring section (46, 48) designed as a ramp-like transition between the first diameter and the second diameter is arranged between each of the first roller sections (52, 56) and the second roller section (54), **characterised in that** the pendulum mass carrier part (2, 64, 72, 86) and/or the at least one pendulum mass (11, 12, 13, 14) has a sliding layer (80, 82).

2. The centrifugal-force pendulum device (1) according to claim 1, **characterised in that** the centring sections (46, 48) each have a diameter, which increases steadily from a first roller section (52, 56) with the first diameter to the second roller section (54) with the second diameter.

3. The centrifugal-force pendulum device (1) according to any one of the preceding claims 1 or 2, **characterised in that** the pendulum mass support part (2, 64, 72, 86) and/or the at least one pendulum mass (11, 12, 13, 14) has a recess (78) for receiving the at least one pendulum roller (25, 26, 35, 36, 44) on its second roller section (54) and the at least one pendulum roller (25, 26, 35, 36, 44) is guided tightly and with play into the recess (78).

4. The centrifugal-force pendulum device (1) according to any one of claims 1 to 3, **characterised in that** the pendulum mass support part (2, 64, 72, 86) and/or the at least one pendulum mass (11, 12, 13, 14) has a surface with a reduced roughness.

## Revendications

1. Dispositif de pendule centrifuge (1), en particulier pour une chaîne cinématique d'un véhicule à moteur doté d'un moteur à combustion interne, comprenant une partie de support de masse pendulaire (2, 64, 72, 86) qui peut tourner autour d'un axe de rotation et au moins une masse pendulaire (11, 12, 13, 14) disposée sur la partie de support de masse pendulaire (2, 64, 72, 86) qui peut être déplacée sous l'effet de la force centrifuge, la au moins une masse pendulaire (11, 12, 13, 14) étant guidée sur la partie de support de masse pendulaire (2, 64, 72, 86) à l'aide d'au moins un rouleau pendulaire (25, 26, 35, 36, 44), le rouleau pendulaire (25, 26, 35, 36, 44) ayant un axe de rotation de rouleau pendulaire (50), deux premières sections de rouleau (52, 56) ayant chacune un premier diamètre et une deuxième section de rouleau (54) disposée entre les premières sections de rouleau (52, 56) dans la direction d'extension de l'axe de rotation de rouleau pendulaire (50) ayant un deuxième diamètre, le premier diamètre étant plus petit que le deuxième diamètre et, entre les premières sections de rouleau (52, 56) et la deuxième section de rouleau (54), une section de centrage (46, 48) sous forme de transition de type rampe formée entre le premier diamètre et le deuxième diamètre étant respectivement disposée, **caractérisé en ce que** la partie de support de masse pendulaire (2, 64, 72, 86) et/ou la au moins une masse pendulaire (11, 12, 13, 14) présentent une couche de glissement (80, 82).

2. Dispositif de pendule centrifuge (1) selon la revendication 1, **caractérisé en ce que** les sections de centrage (46, 48) ont chacune un diamètre qui augmente régulièrement en partant d'une première section de rouleau (52, 56) avec le premier diamètre jusqu'à la deuxième section de rouleau (54) avec le deuxième diamètre.

3. Dispositif de pendule centrifuge (1) selon l'une quelconque des revendications 1 ou 2 précédentes, **caractérisé en ce que** la partie de support de masse pendulaire (2, 64, 72, 86) et/ou la au moins une masse pendulaire (11, 12, 13, 14) présentent un évidement (78) pour recevoir le au moins un rouleau pendulaire (25, 26, 35, 36, 44) sur sa deuxième section de rouleau (54) et le au moins un rouleau pendulaire (25, 26, 35, 36, 44) est guidé dans l'évidement (78) avec du jeu et étroitement.

4. Dispositif de pendule centrifuge (1) selon l'une quelconque des revendications 1 à 3, **caractérisé en ce que** la partie de support de masse pendulaire (2, 64, 72, 86) et/ou la au moins une masse pendulaire (11, 12, 13, 14) présentent une surface à rugosité réduite.
